# EUROPEAN PATENT SPECIFICATION

(11) **EP 3 414 389 B1**
(45) Date of publication and mention of the grant of the patent: **06.03.2024**
(21) Application number: 17710070.8
(22) Date of filing: 10.02.2017
(51) Int. Cl.: D06M 23/14, B29C 51/00, B29C 51/14, D06M 23/16

(54) **THERMOFORMING PROCESS FOR PATTERNED FABRIC SUBSTRATE**
THERMOFORMVERFAHREN FÜR EIN GEMUSTERTES GEWEBESUBSTRAT
PROCÉDÉ DE THERMOFORMAGE DESTINÉ À UN SUBSTRAT DE TISSU À MOTIFS

(30) Priority: 12.02.2016 GB 201602584
(43) Date of publication of application: 19.12.2018
(73) Proprietor: MAS Innovation (Private) Limited, 02 Colombo (LK)
(72) Inventor: MEEMADUMA, Tharindu, Walgama Malwana (LK); RANASINGHE, Sudesh, Walgama Malwana (LK); YATAGAMA, Shimali, Walgama Malwana (LK)
(74) Representative: Marks & Clerk LLP
(86) International application number: PCT/SG2017/050058
(87) International publication number: WO 2017/138887

(56) References cited:
- WO-A1-2015/173524
- US-A1- 2006 223 415
- US-A1- 2007 264 462

## Description

### Field of Invention

The current invention relates to a molded fabric article, wherein the article does not suffer for permanent wrinkles introduced in the molding process. The invention also relates to the molding process.

### Background

Silicone and other elastomeric polymers have been used as coatings in diverse applications, from fashion wear in women's stockings to technically demanding air bags. The use of silicone and other elastomeric polymers in the coating of a fabric for clothing is normally based on cross-linked silicone polymers or elastomers, which can be formulated into crystal-clear coatings that can be either soft and flexible or hard and rigid. The use of such polymers in fabrics for clothing has been used to provide a number of qualities to the fabric, such as adding breathable water repellency (hydrophobicity) and water resistance to fashion textiles and sportswear, to modify the look and feel of a fabric (e.g. to provide a "paper" touch), to add toughness and heat resistance, and to add support/elasticity to a garment.

In fabrics, the silicone polymer coating has been applied to a flat substrate, and the silicone coating may then be subject to the addition of a coating layer itself (e.g. flock material). The resulting flat substrate may then be formed and sewn into a cylinder for use as part of an article of clothing (e.g. as a band at the top of women's stockings).

While silicone has been known to provide a useful supporting function within a fabric, and so help a fabric retain a three-dimensional shape, it has been difficult to impart said three-dimensional shapes without causing permanent creases or wrinkles in the fabric when using any means other than sewing or bonding the fabric together in some way to provide the three dimensional shape.

For example, WO 2015/173524 A1 discloses an undergarment manufacturing process as well as undergarments has two superimposed or layered textiles; the process comprising depositing, on certain parts, reinforcements comprising a thick layer of shaped memory foam elastic material, polymerization of this material as well as the shaping of undergarment textiles by thermoforming, further comprising a step of depositing over the full surface of at least one of the textiles, a thin layer of an elastic bonding material, followed by a polymerization step of this thin bonding layer during thermoforming of the shape.

US 2006/223415 A1 describes undergarments, in particular a brassiere based on textile article. The textile article is made of elastic material comprising at least one zone intended for forming by thermal molding, wherein, the article comprises at least over one part of said zone a support region in which the textile material is covered prior to thermal molding with a non-moldable material with shape-memory.

US 2007/264462 A1 relates to articles including a multiple layer construction. The layers include fabric and/or polyurethane foam in combination with a polyurethaneurea composition, wherein the multilayered contraction can be molded.

### Summary of Invention

It has been surprisingly found that the three-dimensional molding of a fabric patterned with uncured silicone results in a product that is free of permanent creases and/or wrinkles, while providing the desired supportive properties, as well as aesthetic appeal.

In a first aspect of the invention, there is provided a method of making a molded 3-dimensional fabric article, the process comprising the steps of:
(i) providing a thermoformable fabric substrate having a top face and a bottom face;
(ii) applying an uncured elastomeric coating composition comprising an elastomeric polymer onto the top and/or bottom face of the fabric substrate in accordance with a pattern to form a thermoformable blank patterned with the uncured elastomeric coating composition;
(iii) thermoformably moulding the blank by applying a 3-dimensional mold for a period of time to provide a 3-dimensional molded article that is patterned with a cured elastomeric coating composition; and
(iv) removing the molded article from the mold, and optionally trimming any excess fabric, to provide a molded 3-dimensional fabric article, wherein:
   the elastomeric coating composition further comprises an agent that retards the curing of an elastomeric coating;
   the 3-dimensional mold in step (iii) is applied at a temperature and pressure sufficient to form the desired 3-dimensional molded article from the thermoformable fabric substrate and cure the uncured elastomeric coating composition during the period of time that it is applied to the blank, and
   the molded 3-dimensional fabric article is a textile, forms the whole of a garment or forms a part of a garment.

In embodiments of the invention, the thermoformable fabric substrate may be a substantially flat, thermoformable fabric substrate. In alternative embodiments of the invention, the thermoformable fabric substrate may be a semi-shaped fabric substrate, where at least one region of the substrate has 3-dimensional character, optionally the thermoformable substrate may be a thermoformed fabric substrate, where at least one region of the substrate has 3-dimensional character introduced by a 3-dimensional mold in a prior thermoforming step. For example, when a thermoformed fabric substrate is used, in step (iii) above the thermoformable moulding step may be conducted on the at least one region having 3-dimensional character,or may be conducted on a region of the substrate that encompasses the at least one region having 3-dimensional character, to provide a fully-shaped and molded 3-dimensional fabric article. It will be appreciated that the uncured elastomeric coating may be applied to the at least one region having 3-dimensional character.

In embodiments of the invention, the molding operation is conducted for under conditions (e.g. a period of time, a temperature and a pressure) that are sufficient to substantially cure the elastomeric coating composition.

In embodiments of the invention, after step (ii) and before step (iii), one or more of a flock material, glitter, and glass beads may be applied onto the top and/or bottom surface of the flat blank patterned with the uncured elastomeric coating composition and, when needed, the excess flock material and/or glitter and/or glass beads may then be removed either immediately after application or as part of step (iv). In additional or alternative embodiments, after step (ii) and before step (iii), a further substantially flat fabric substrate may be applied onto the top and/or bottom surface of the flat blank patterned with the uncured elastomeric coating composition.

In yet further embodiments of the invention:
(a) the elastomeric coating composition may further comprise a colouring agent and/or an agent that retards the curing of the silicone polymer;
(b) when the molded 3-dimensional fabric article forms a part of a garment it may be used in further process steps to form a garment (e.g. the molded 3-dimensional fabric article may be a bra cup, a chest piece (e.g. comprising two breast cups with breast support), a shoulder pad, a buttock or buttocks support, or a contouring support for a body part), or when the molded 3-dimensional fabric article is a textile it is used in further process steps to form the whole or part of a garment;
(c) before step (iii) is conducted, the substantially flat blank is kept under conditions (e.g. temperature and time) that are not sufficient to activate the curing process or are not sufficient to achieve an amount of curing that results in wrinkles in the molded article, wherein the 3-dimensionally molded fabric article is a textile, or forms the whole or part of a garment.

In certain embodiments of the invention, the elastomeric polymer may be selected from one or more of the group consisting of a silicone polymer, an ethylene propylene co-polymer, ethylene propylene diene copolymer, a polyurethane, an epichlorohydrin polymer, an acrylic polymer, a flurorosilicone polymer, a fluoroelastomer, a perfluoroelastomer, a polyether block amide, a chlorosulfonated polyethylene, and an ethylene-vinyl acetate polymer. In particular embodiments of the invention, the elastomeric polymer may be a silicone polymer (e.g. a liquid silicone rubber).

In yet further embodiments of the invention, the application of the elastomeric polymer may be accomplished by jetting or, more particularly, by printing (e.g. screen printing), spraying, painting, or extrusion.

In yet still further embodiments of the invention, the process may further comprise:
(a) applying the uncured elastomeric coating composition onto a first surface of a thermoformable polymeric membrane material to form a membrane composite material and then bonding the membrane composite material to the top and/or bottom face of the fabric substrate via a second surface of the thermoformable polymeric membrane material to form the patterned thermoformable blank provided in step (ii) of the first aspect of the invention; and/or
(b) bonding a thermoformable polymeric membrane material to the top and/or bottom face of the fabric substrate to form a membrane region and subsequently applying the uncured elastomeric coating composition onto the membrane region to form the patterned thermoformable blank provided in step (ii) of the first aspect of the invention. It will be appreciated that both methods can be used on the same surface of a substrate (e.g. top and bottom) or on different surfaces of the substrate. In certain embodiments that may be mentioned herein the thermoformable polymeric membrane material may be a polyurethane membrane material, optionally wherein the thickness of the thermoformable polymeric membrane material may be from 5 µm to 50 µm, such as 30 µm.

In a second aspect of the invention, there is provided a 3-dimensionally moulded fabric article comprising:
a thermoformable fabric substrate comprising a top surface and a bottom surface; and
a pattern on the top and/or bottom surface of the fabric substrate formed from a cured elastomeric coating composition, wherein
the top and/or bottom surface of the fabric substrate is substantially free of permanent wrinkles, wherein the 3-dimensionally molded fabric article is a textile, or forms the whole or part of a garment; and the elastomeric coating composition further comprises an agent that retards the curing of the silicone polymer.

In embodiments of the invention, the elastomeric coating composition may be attached to and covered by one or more of a flock material, glitter and glass beads. In additional or alternative embodiments of the invention, the article may further comprise a layer of fabric placed over the top and/or bottom surface of the fabric substrate and attached to the elastomeric coating composition (e.g. the layer of fabric placed over the top surface and/or of the fabric substrate may also not contain one or more permanent wrinkles introduced by the moulding process).

In yet further embodiments of the invention, the elastomeric coating composition may further comprise a colouring agent.

In still further embodiments of the invention, the molded 3-dimensional fabric article may form the whole of a garment or may form part of a garment (e.g. the molded 3-dimensional fabric article may be a bra cup, a chest piece (e.g. comprising two breast cups with breast support), a shoulder pad, a buttock or buttocks support, or a contouring support for a body part). When the article is a textile, the textile may be used to form the whole or part of a garment.

It will be appreciated that the elastomeric polymer used in the second aspect of the invention may be selected from those mentioned in connection to the first aspect of the invention. For example, in keeping with embodiments of the first aspect of the invention, the article may further comprise a thermoformable polymeric membrane material sandwiched between the thermoformable fabric substrate and the cured elastomeric coating composition, where the thermoformable polymeric membrane material and its thickness may be the same as described in the first aspect of the invention.

### Drawings

Figure 1 describes a process to prepare a flat fabric blank for use in the thermoforming process of embodiments of the invention.
Figure 2 depicts a thermoforming mold suitable for use in embodiments of the invention.
Figures 3A-D depict mold plates that may be used in embodiments of the current invention.
Figures 4 to 7 depict the use of transfer plates to securing a blank into position, optionally with the aid of dummy plate (as shown in Figures 5 and 6).
Figures 8 and 9 depict the placement of the blank and transfer plates onto the mold and the application of the mold to the blank.
Figure 10A is a picture of a thermoformed bra cup prepared using a blank patterned with a flocked elastomer (silicone) that has been allowed to cure before thermoforming.
Figure 10B is a picture of a thermoformed bra cup according to the current invention, which has been prepared using a blank patterned with a flocked elastomer that was thermoformed before the elastomer cured.
Figures 11A-B depict thermoformed bra cups according to an embodiment of the invention.
Figure 12 depicts a bra according to an embodiment of the invention.
Figures 13 and 14 depict underwear/shapewear according to an embodiment of the invention.
Figure 15 depicts a knee guard according to an embodiment of the invention.

### Description

It has been surprising discovered that ensuring a smooth, wrinkle-free appearance of a 3-dimensionally (3D) molded fabric article with an elastomeric material applied to the whole or part of a surface of the fabric can be achieved by subjecting the article to molding before the elastomeric material has become cured. The curing of the elastomeric polymer may be accomplished during the molding step.

This method of making a molded 3-dimensional fabric article, involves the steps of:
(i) providing a thermoformable fabric substrate having a top face and a bottom face;
(ii) applying an uncured elastomeric coating composition comprising an elastomeric polymer onto the top and/or bottom face of the fabric substrate in accordance with a pattern to form a thermoformable blank patterned with the uncured elastomeric coating composition;
(iii) thermoformably moulding the blank by applying a 3-dimensional mold for a period of time to provide a 3-dimensional molded article that is patterned with a cured elastomeric coating composition; and
(iv) removing the molded article from the mold, and optionally trimming any excess fabric, to provide a molded 3-dimensional fabric article, wherein:the elastomeric coating composition further comprises an agent that retards the curing of an elastomeric coating;
the 3-dimensional mold in step (iii) is applied at a temperature and pressure sufficient to form the desired 3-dimensional molded article from the thermoformable fabric substrate and cure the uncured elastomeric coating composition during the period of time that it is applied to the blank, and the molded 3-dimensional fabric article is a textile, forms the whole of a garment or is used in further process steps to form part of a garment.

The terms "thermoforming" or "thermoformably moulding" when used herein relates to a process where the shape of a material or substrate is changed through the application of heat and pressure with the aid of a mold. The pressure applied to the substrate may be in the form of a positive pressure (e.g. where the mold is pressed against the substrate) or under negative pressure (e.g. the substrate is pressed against the mold by a vacuum - i.e. vacuum forming). In certain embodiments that may be mentioned herein, the process may involve heating the substrate and stretching it over a mold under negative pressure to provide a 3-dimensional structure. In particular embodiments that may be mentioned herein, the thermoforming may involve the use of a heated mold system as described hereinbelow.

In certain embodiments of the above, the thermoformable fabric substrate may be a substantially flat, thermoformable fabric substrate. The term "substantially flat substrate", when used herein relates to the whole or part of a substrate that has a surface that is level and does not have any raised areas or indentations. It will be appreciated that in the some of the embodiments of the current invention, the substrate may be entirely flat. However, in alternative embodiments, the substrate may optionally contain one or more areas that are not flat (e.g. contain a raised area and/or indentation). When the substrate contains non-flat areas, it is preferable in certain embodiments of the invention that these areas do not form part of a section of the substrate subjected to the above method.

In alternative embodiments of the invention, the thermoformable fabric substrate may be a semi-shaped fabric substrate, where at least one region (e.g. 1 to 20, such as 1 to 10, or 2 to 5) of said substrate has 3-dimensional character, as defined herein (e.g. contains raised areas and/or indentations). It will be appreciated that the semi-shaped fabric substrate is made from a thermoformable material, but that the one or more regions having 3-dimensional character may be formed by any suitable method, which may include thermoforming.

When used herein, "semi-shaped fabric substrate" relates to a thermoformable fabric substrate where one or more regions (e.g. 1 to 20, such as 1 to 10, or 2 to 5) of said substrate have 3-dimensional character (e.g. contain raised portions or indentations) relative to the remainder of the substrate which is substantially flat which is subjected to thermoforming in step (iii) to increase the 3-dimensional character of at least one of the regions having 3-dimensional character and may in certain embodiments impart 3-dimensional character to the surrounding substantially flat portion of the substrate as well. It will be appreciated that the uncured elastomeric coating composition may be applied to the one or more regions having 3-dimensional character and/or substantially flat regions in the semi-shaped substrate, so as to provide the fully-shaped product. For the avoidance of doubt, the term "fully shaped" when used herein refers to the product provided after step (iii) has been completed. That is, "fully shaped" refers to the thermoformed product containing a cured elastomeric coating compositon on at least one surface thereof.

Thus, in step (iii) of the above-mentioned process, the thermoformable moulding step may be conducted on only the at least one region of the semi-shaped fabric substrate that has 3-dimensional character to provide a fully-shaped and molded 3-dimensional fabric article. Additionally or alternatively, in step (iii) of the above-mentioned process, the thermoformable moulding step may be conducted on the at least one region of the semi-shaped fabric substrate that encompasses the at least one region having 3-dimensional character. In the former case, one or more (e.g. all) of the regions having prior-formed 3-dimensional character are further molded, while in the latter case one or more (e.g. all) of the regions having 3-dimensional character are molded along with a portion of substantially flat substrate surrounding said region(s) to provide the fully-shaped and molded 3-dimensional fabric article. As will be appreciated, a combination of the two techniques described above may be applied to a single article in different regions of the substrate having 3-dimensional character (and, where necessary, the surrounding portions of substantially flat substrate) to produce the final fully-shaped article, depending on design needs.

In certain embodiments of the invention that use a semi-shaped fabric substrate, the one or more (e.g. 1 to 20, such as 1 to 10, or 2 to 5) 3-dimensional regions of said substrate may have been introduced by a prior thermoforming step. It will be appreciated that when a prior thermoforming step (or indeed for any method) has been used to introduce 3-dimensional character to one or more regions of the semi-shaped fabric substrate, the degree of shaping must be at a level below the maximum permanent deformation that can be introduced to said material without it suffering mechanical failure. As such, the degree of shaping imparted to the semi-shaped substrate prior to use in the method mentioned herein may be from 1% to 99% of the maximal level of deformation without suffering mechanical failure, such as from 5 to 80% (e.g. from 10 to 50%, such as 10 to 20%) of this maximal level. The semi-shaped substrate is then formed into the fully-shaped substrate in step (iii) by thermoforming with a mold which therefore introduces an increased degree of 3-dimensional character to the regions already having 3-dimensional character (and potentially introduces 3-dimensional character to substantially flat portions surrounding said regions), which results in the further permanent deformation of the at least one region up to the maximum permanent deformation level that can be introduced to said material by without it suffering mechanical failure. For example, if the one or more regions had been subjected to 30% deformation in a prior shaping step, step (iii) of the process described herein may introduce a level of deformation of from 35% to 100% of the maximal level of the substrate in question.

It will be appreciated that for a substantially flat substrate, or portions of a semi-shaped substrate that are substantially flat, the level of permanent deformation that may be introduced may be from 1% to 100% of the maximal level of deformation without suffering mechanical failure, such as from 5 to 80% (e.g. from 10 to 50%, such as 10 to 20%).

When a partially thermoformed substrate is used in embodiments of the invention, the thermoformable moulding step may be conducted on the at least one region having 3-dimensional character or may be conducted on a region of the substrate that encompasses the at least one region having 3-dimensional character. It will be appreciated that when the at least one region is to be subjected to further thermoforming, the uncured elastomeric coating may be applied to the at least one region having 3-dimensional character, resulting in a final product where the top and/or bottom surface of the fabric substrate is substantially free of permanent wrinkles. In alternative embodiments, the uncured elastomeric coating may be applied to a region of the partially thermoformed substrate that has not been thermoformed previously, which is then subsequently thermoformed to provide the final substrate.

The term "thermoformable fabric substrate" when used herein may apply to any suitable fabric (e.g. a woven, non-woven or knitted fabric) that comprises a sufficient amount of thermoformable material, such that the fabric retains a molded shape following thermoform molding. Suitable thermoformable materials include, but are not limited to, spandex, nylon, polyester twist fabrics, and foams (polystyrene and copolymers thereof, polyvinyl chloride, polyethylene, polyurethane, polyisocyanurate, polyphenol, epoxy and silicon resins, cellulose acetate, and various polyolefins). It will be appreciated that the thermoformable fabric substrate may be a blend of two or more thermoformable materials, such as nylon and spandex (e.g. 80 wt% nylon and 20 wt% spandex), or it may be a blend of one or more non-thermoformable materials (e.g. cotton, silk, viscose, modal, and wool) with one or more thermoformable fibre materials, such as a blend of cotton and spandex (80 wt% cotton and 20 wt% spandex). When the fabric comprises a non-thermoformable material, the amount of the themoformable material included in the fabric may be from 5 wt% to 100 wt%, such as 20 wt%. Thermoformability of a material is not only a function of the fibre type and may be affected by the construction of the fabric in question, as is explained in more detail below.

It will be appreciated that certain fabrics made from nominally non-thermoformable materials can also be thermoformable under certain circumstances, such as particular fabric structures or fabric constructions. For example, cotton is nominally non-thermoformable as a material, but if the cotton fabric is formed by a knitting construction process, the resulting fabric may be thermoformable because of the mechanical stretch imparted to the fabric by the knitted construction. However, if cotton is in woven or non-woven, then the resulting woven or non-woven cotton fabric may not be thermoformable.

When used herein, the terms "molded 3-dimensional fabric article" relates to an article that has undergone moulding to impart a 3D structure to the whole or part of a substrate that was previously substantially flat (as defined hereinbefore). When used herein "3D structure" refers to a permanently contoured non-flat 3D structure that may relate to a raised area and/or to an indented area of part of (or the whole of) an article. By "permanently contoured", it is meant that the article can recover the contoured shape even after being subjected to a deformation force.

The application of the uncured elastomeric coating composition may be accomplished using any suitable application means. This may include jetting or, more particularly, spraying, painting, printing, or extrusion. In certain embodiments mentioned herein, a method that may be used for the application of the uncured elastomeric coating composition is screenprinting, though it will be appreciated that other methods of printing may also be used, such as continuous printing, digital printing and 3D printing.

The "3-dimensional mold" used herein may relate to any suitable molding apparatus that is capable of applying sufficient heat and pressure to a blank fabric substrate containing an uncured elastomeric coating composition to form the 3-dimensional article and cure the elastomeric coating composition. Some suitable molding machines include bra cup molding machines made by Hitco, New Pads NPI and Perfecta Schmid AG.

The term "uncured" when used in reference to an elastomeric polymer or elastomeric coating composition refers to a composition that contains an elastomeric polymer in a highly-adhesive gel or liquid state. As such, the uncured elastomeric polymer or elastomeric coating composition can be easily deformed permanently or reshaped by hand. The term "cured" when used in reference to an elastomeric polymer or elastomeric coating composition refers to a composition that contains an elastomeric polymer that is not substantially (i.e. is not) adhesive and which is not permanently deformable and cannot be reshaped by hand, which occurs when the degree of crosslinking within the elastomeric polymer reaches as threshold level for that polymer (gelation). In the context of the current invention, the difference between "uncured" and "cured" states of an elastomeric polymer or elastomeric coating composition may also be noticed by the fact that when a flat blank that contains an already cured elastomeric coating composition is molded, the resulting 3-dimensional article will have observable wrinkles occurring on its surface. These wrinkles cannot be removed even by thermoforming it again. In contrast, when a flat blank that contains an uncured elastomeric coating composition is molded, the resulting 3-dimensional article does not have observable wrinkles occurring on its surface, and appears smooth. Without wishing to be bound by theory, it is believed that when a flat blank that contains a cured elastomeric polymer or elastomeric coating composition is subjected to thermoforming, the wrinkles are formed in the surface of the 3-dimensional molded article because the crosslinks in the cured polymeric material result in differential thermal shrinkage between the polymeric material and the fabric substrate to which it has been applied to.

The term "textile" when used herein refers to a final composite material that comprises the thermoformable fabric substrate and the cured elastomeric coating, which has one or more regions that have been subjected to thermoforming with a mold to impart a 3-dimensional structure. The textile is intended to be used to form the whole or part of a garment following additional processing steps.

The term "garment" when used herein may refer to armwear (e.g. armbands, elbowpads, epaulettes, and shoulder pads), a belt, children's clothing, coats, dresses, footwear, gowns (excluding dresses, such as academic gowns), headwear, hoisery (e.g. socks, compression garments/stockings, tights, stockings, leggings, and pantyhose), jackets, jeans, neckwear (e.g. collars), one-piece suits, outerwear, ponchos, robes, cloaks, saris, shawls, wraps, skirts, sports clothing, suits, tops (e.g. shirts, t-shirts), trousers, shorts, undergarments and the like. The final product of the process described herein may be in the form of the whole or part of a garment. For example, when the final product forms part of a garment it may be, but it is not limited to, a bra cup, a chest piece (e.g. comprising two breast cups with breast support), a shoulder pad, a buttock or buttocks support, or a contouring support for a body part. The term "garment" may be used herein interchangeably with the term "clothing".

As noted hereinbefore, the molding operation in step (iii) should be conducted for a sufficient time and at a sufficient temperature to ensure that the elastomeric coating composition becomes cured. Thus, the molding conducted in step (iii) above may be conducted for a period of time that is sufficient to substantially cure the elastomeric coating composition. This may be from 1 second to 10 minutes, for example from 30 seconds to 5 minutes, such as from 1 to 3 minutes. Therefore, it will be appreciated that the molding operation is initiated before the elastomeric coating composition has become cured in accordance with the definition provided herein.

The application of the uncured elastomeric coating composition may take place on a single side of the substrate or on both sides of the substrate. For example, this may make it possible to incorporate differing patterns on either side, or allow the application of a fabric to one side and a flock to the other, such application of materials are discussed in more detail below.

In certain embodiments of the invention, the process of step (ii) may be modified to further comprise:
(a) applying the uncured elastomeric coating composition onto a first surface of a thermoformable polymeric membrane material to form a membrane composite material and then bonding the membrane composite material to the top and/or bottom face of the fabric substrate via a second surface of the thermoformable polymeric membrane material to form the patterned thermoformable blank provided in step (ii); and/or
(b) bonding a thermoformable polymeric membrane material to the top and/or bottom face of the fabric substrate to form a membrane region and subsequently applying the uncured elastomeric coating composition onto the membrane region to form the patterned thermoformable blank provided in step (ii).

The thermoformable polymeric membrane material may be a polyurethane membrane material, optionally wherein the thickness of the thermoformable polymeric membrane material may be from 5 µm to 50 µm, such as 30 µm. It will be appreciated that it is possible to make use of both modifications (a) and (b) on a single substrate. For example, the modification (a) may be applied to the top surface, while modification (b) of step (ii) may be applied to the bottom surface and *vice versa.* In addition, it will be recognised that both modification (a) and (b) may be applied as part of the process to the same surface of a substrate or only one may be used.

With respect to bonding the thermoformable polymeric membrane material to the fabric substrate, the conditions used may be varied depending on whether modified process (a) or (b) is used. For example, when modified process (a) is used, the bonding may be accomplished with the use of a glue (e.g. a polyurethane glue or the like). However, when modified process (b) is used, the bonding may be accomplished using an adhesive as for modification (a), but it may also be accomplished using heat bonding too. When an adhesive is used to accomplish the bonding between the substrate and the membrane material, the adhesive may be conveniently applied to the substrate.

After step (ii) and before step (iii), one or more of a flock material, glitter and glass beads may be applied onto the top and/or bottom surface of the flat blank patterned with the uncured elastomeric coating composition. It will be appreciated that, as the uncured elastomeric coating composition has adhesive properties, some or all of the material so applied becomes fixed in place and is retained after molding and curing. If needed, any excess flock material/ glitter/glass beads may be removed either immediately after application or as part of step (iv).

In additional or alternative embodiments, after step (ii) and before step (iii), a further substantially flat fabric substrate may be applied onto the top and/or bottom surface of the flat blank patterned with the uncured elastomeric coating composition. In order to achieve the desired properties for the products described herein, this "further substantially flat fabric substrate" is preferably any suitable material that is also thermoformable, such as those described hereinbefore.

The elastomeric coating composition may be selected from one or more of the group consisting of a silicone polymer, an ethylene propylene co-polymer, ethylene propylene diene copolymer, a polyurethane, an epichlorohydrin polymer, an acrylic polymer, a flurorosilicone polymer, a fluoroelastomer, a perfluoroelastomer, a polyether block amide, a chlorosulfonated polyethylene, and an ethylene-vinyl acetate polymer. For example, the elastomeric polymer may be a silicone polymer (e.g. a liquid silicone rubber).

While the elastomeric coating composition may be used as is, such that it is colourless or is white, it will be appreciated that a colouring agent may be added to the composition. This may be useful in providing a contrasting colour to the applied elastomeric polymer, which may have been applied in an aesthetically pleasing pattern, such that the aesthetic impart of the final product is improved.

The elastomeric coating contains an agent that retards the curing of the silicone polymer. This latter agent may be useful in helping to prolong the uncured state of the elastomeric coating composition on the patterned blank, which may help to reduce wastage caused by a production delay, which would otherwise result in the elastomeric coating composition becoming cured.

It will be appreciated that an important part of the current invention is to ensure that the elastomeric coating composition remains in an uncured state until it is applied to the mold. That is, it is preferred that the substantially flat blank that is patterned with the elastomeric coating composition is kept under conditions that are not sufficient to activate the curing process needed to cure said elastomeric coating composition. However, while this may be accomplished by reducing the temperature of the composition, it may not be practical to keep the composition under conditions that does not cause a certain amount of curing to occur. This is because many elastomeric coating compositions may still cure if left for a sufficient amount of time even when stored at low temperatures (e.g. as low as 100°C). Given this, it is essential that the period of time between steps (ii) and (iii) is controlled at any given temperature so as to ensure that the elastomeric polymer(s) in the elastomeric coating composition are still in an uncured state when step (iii) is performed. For example, the time between the completion of step (ii) and the beginning of step (iii) may be from 1 second to 15 minutes, such as from 1 minute to 10 minutes at around room temperature (i.e. 20°C to 25°C). It will be appreciated that the time of curing may be delayed or accelerated depending on the temperature that the patterned blank is stored at. For example, if the patterned blank is stored at around -100°C, the time to cure the elastomeric polymer(s) may be prolonged, while if the patterned blank is stored at around 50°C, then the cure time may be shortened. The curing is prolonged by the addition of an agent that retards curing, thereby altering the conditions (time and temperature) needed to effect curing.

It will also be appreciated that the conditions that are used for curing in step (iii) will vary depending on the elastomeric polymer that is used. Even then, different conditions may be successful. This is because the curing of an elastomeric polymer in the molding process of step (iii) herein is a function of temperature, cycle time (molding time), and the pressure applied to the substrate during molding. Thus, not only the temperature, but also the cycle time and pressure exerted influence the curing action. For example, for an elastomeric polymer that may be used herein, a similar level of curing might be achieved under the two instances provided below (while applying the same pressure with the mold):
1. applying the mold at 170°C for 2 minutes; or
2. applying the mold at 140°C for 5 minutes.

One method according to the current invention will now be described in further detail. It will be appreciated that this process may be modified without departing from the scope of the claimed invention.

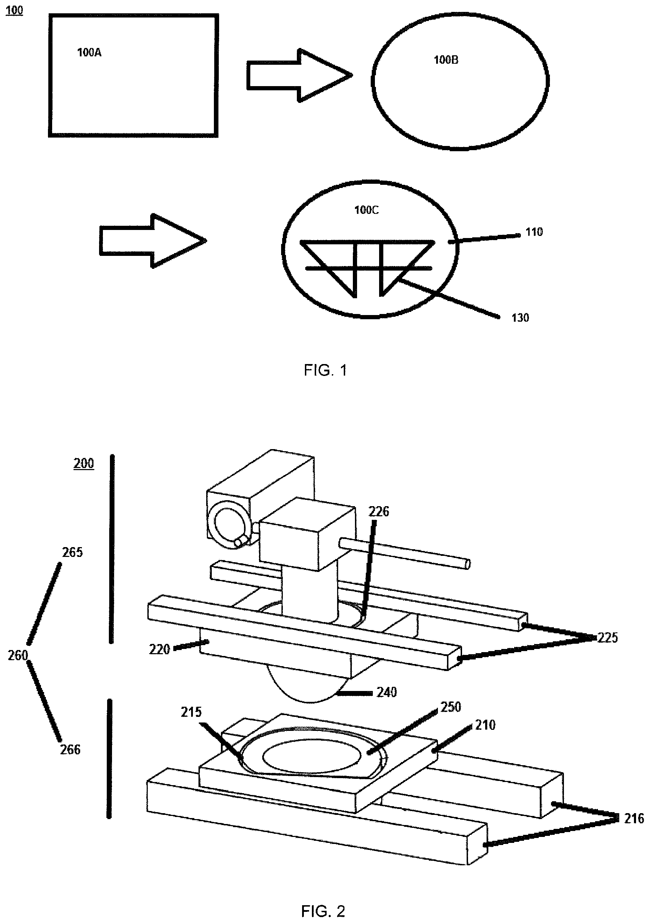

Figure 1 describes a process to prepare a flat fabric blank for use in the thermoforming process discussed hereinbefore. A substantially flat fabric substrate 100A made from a blend of 55 wt% cotton, 30 wt% nylon and 15 wt% spandex is initially provided. As the substrate is essentially a flat 2-dimensional fabric, the substrate has a top face 110 and a bottom face (not shown). The substrate 100A is cut to the desired shape 100B and is then provided to a screen printing apparatus where an uncured, coloured silicone polymer composition (i.e. an uncured elastomeric coating composition) is applied onto the top face of the fabric substrate in accordance with a pattern 130 determined by the screen printing apparatus to provide a substrate that is patterned with the uncured silicone polymer composition (i.e. a substantially flat, thermoformable blank patterned with the uncured elastomeric coating composition). The patterned substrate 100C is then ready to be presented to a thermoforming mold. While the application process described above only applies an uncured elastomeric coating composition onto the top face 110 of the substrate 100B, it will be appreciated that the uncured elastomeric coating composition can be applied to the top 110 and/or bottom faces of the substrate 100B.

Figure 2 depicts a thermoforming mold 200 suitable to apply the 3D shape to the blank 100C, while also being able to apply heat to the supplied blank. The mold comprises a main plate 210, a clamping plate 220 attached to a clamping bar 225 on an upper part 265 of a press 260, two transfer plates 230, 235 (not depicted in Figure 2), a male mold part 240, a female mold part 250 supported on a clamping bar 216 of lower part 266 of the press 260 that can apply heat to one or more of the mold parts and plates, thereby enabling heat to be transferred to the blank.

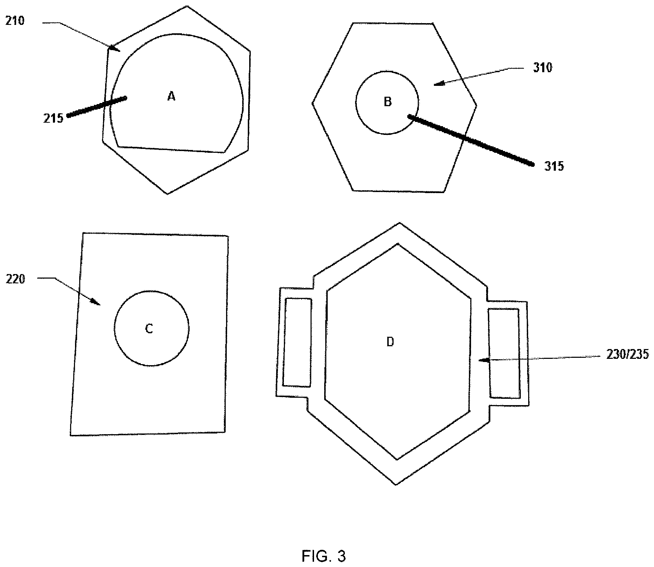

Figures 3A-D depict in more detail plates that may form part of the molding apparatus for use in the current invention. These plates include the main plate 210 (Fig. 3A), a dummy plate 310 (Fig. 3B), the clamping plate 220 (Fig. 3C) and one of transfer plates 230, 235 (Fig. 3D). The dummy plate 310 does not form part of the molding apparatus, but may be used to aid in the alignment of the blank on the transfer plates 230, 235, as discussed hereinbelow.

The male 240 and female 250 mold parts may be made of a metal, such as aluminium. However, as the silicone (or any other elastomeric polymer) may stick to the surface of a metal under heating, the surface of the mold parts that come into contact with the blank may be coated with a non-stick coating, such as polytetrafluoroethylene (PTFE), to prevent this occurring. In preparation for use, the main plate 210 is fixed onto the female mold 250 and hung at a lower part 266 of the press 260, the male mold part 240 is hung on an upper portion 265 of the press 260, while the clamping plate 220 (whose lower surface may also be coated with PTFE) is attached to the clamping bars 225 on the upper portion 265 of the press 260. The main plate 210 comprises a first holding 215 means or apparatus that holds the female mold part in position (e.g. the first holding means may be a hole 215 in the main plate 210 that is configured to hold the female mold), as well as a second holding means or apparatus that assists with holding the transfer plates (and thereby the blank to be molded) into position (not shown). The clamping plate 220 contains a hole 226 that allows at least part of the male mold 240 part to pass through to effect 3D molding of the fabric substrate (not depicted).

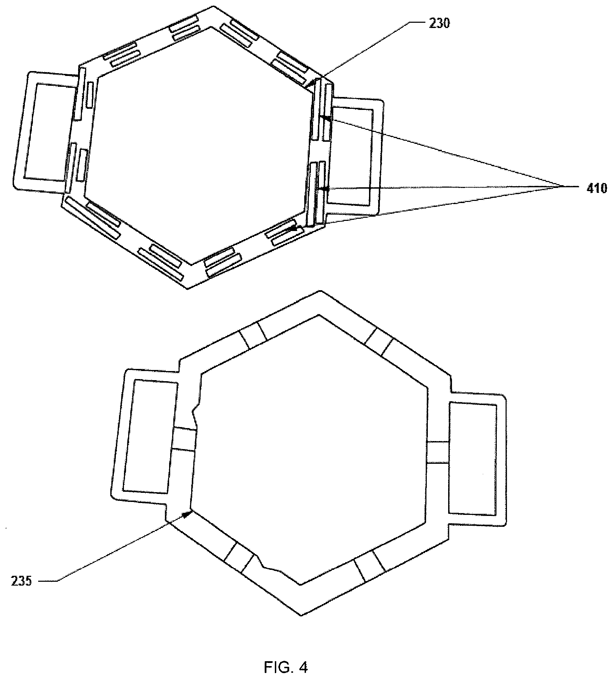

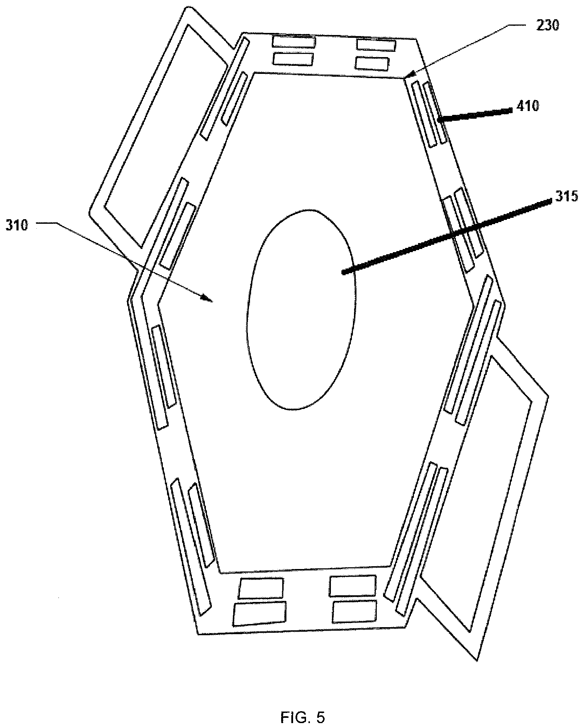

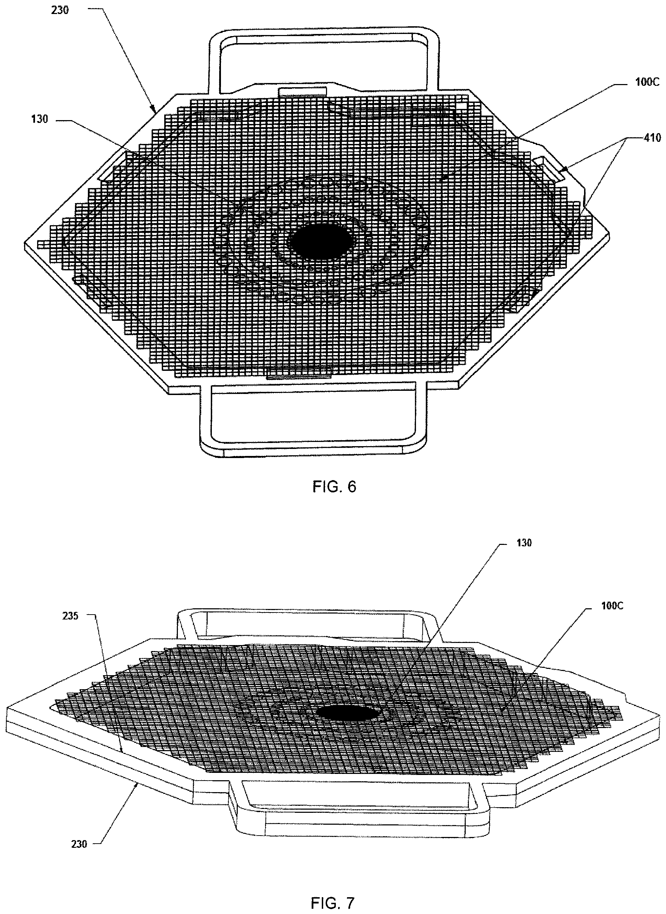

Figures 4 to 7 depict the first 230 and second 235 transfer plates and their use in securing the blank 100C into position (130 representing the pattern of the elastomeric coating composition), optionally with the aid of dummy plate 310. The first 230 and second 235 transfer plates can be coupled together to form a frame that holds a central portion of a blank. The coupling mechanism may be any suitable mechanism, though for ease of use and as depicted in Figures 4 to 6, the coupling mechanism may be a plurality of magnets 410 situated around the periphery of the transfer plates. Said magnets are strong enough to prevent the blank from slipping while the blank is subjected to the pressure applied by the mold. Thus, the patterned substrate 100C, whose preparation is discussed above, is placed on top of the first transfer plate, such that substantially the whole (e.g. the entire) area of the blank containing the uncured silicone composition pattern is situated within the frame. Optionally, to assist with the alignment of the patterned blank 100C, a dummy plate 310 with a hole 315 may be placed below the first transfer plate (Figures 5 and 6). The hole 315 in the dummy plate 310 may be positioned and patterned to correspond to the shape and size of the uncured silicone composition pattern 130 applied to the patterned blank (or at least a potion thereof). For example, as depicted in Figure 6, if the pattern 130 occupies a circular region in the blank 100C, the hole 315 in the dummy plate 310 may also be circular, so that it can act as a guide means or apparatus to assist in the proper alignment of the blank on the first transfer plate 230. Following the placement of the blank 100C on the first transfer plate 230, the second transfer plate 235 is laid on top of the first transfer plate 230 and the plates are coupled together (Figure 7), thereby sandwiching the blank within the transfer plates and holding it in position.

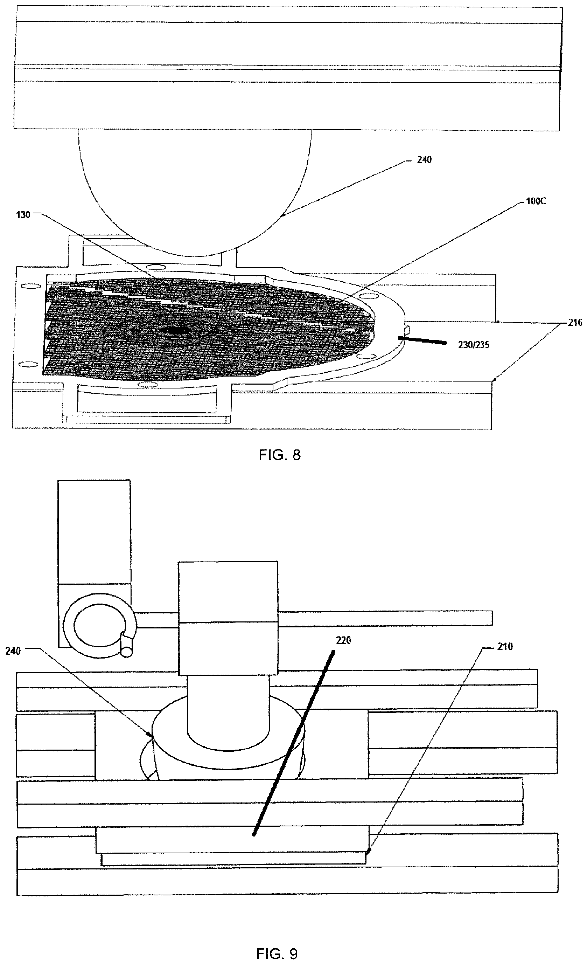

Figures 8 and 9 depict the placement of the blank and transfer plates onto the mold and the application of the mold to the blank. The first 230 and second transfer 235 plates containing the blank 100C are then placed onto the second holding means or apparatus on the main plate 210 (as shown in Figure 8) and the press 260 is operated such that the clamping plate 220 and male molding part 240 press down onto the blank 100C (as shown in Figure 9), forcing it into the female mold part 250. The male and/or female mold parts may be preheated to a temperature that is sufficient when used in combination with the pressure of application and period of time used to impart the desired 3D shape to the blank and to ensure curing of the silicone composition. The resulting molded, 3-dimensional fabric article is removed from the mold and may be trimmed accordingly.

In certain embodiments, the pattern applied to the substrate may extend beyond the area that is to be directly subjected to molding. In this circumstance, the clamp plate may also be subjected to heating to a similar temperature as the male and/or female mold parts as part of the molding operation in order to ensure that the uncured elastomeric coating composition in this area also becomes cured.

The product produced by the process described above is a 3-dimensionally moulded fabric article comprising:
a thermoformable fabric substrate comprising a top surface and a bottom surface; and
a pattern on the top and/or bottom surface of the fabric substrate formed from a cured elastomeric coating composition, wherein
the top and/or bottom surface of the fabric substrate is substantially free of permanent wrinkles wherein
the 3-dimensionally molded fabric article is a textile, or forms the whole or part of a garment; and the elastomeric coating composition further comprises an agent that retards the curing of the silicone polymer.

When used herein "substantially free of permanent wrinkles" refers to creases that cannot be readily removed from a 3D material without permanently deforming the material, or indeed removed at all. When a blank 100C that has a pattern 130 of elastomeric coating composition that has already cured is molded, wrinkles occur on its surface. These wrinkles cannot be removed even by thermoforming it again. This happens because of the differential thermal shrinkage between the cured elastomeric coating composition and the fabric substrate of the blank as the cured elastomeric coating composition already irreversibly contains crosslinks that prevents a smooth molded surface from being formed.

As discussed herein, the elastomeric coating composition on the top and/or bottom layer of the fabric substrate may be attached to and covered by one or more of a flock material, glitter and glass beads. Alternatively or additionally, the top and/or bottom layer of the fabric substrate may further comprise a layer of fabric that is attached to the elastomeric coating composition, optionally this fabric layer also does not contain any permanent wrinkles. These materials may be as described hereinbefore.

For completeness, it is noted that the use of the modified versions of step (ii) above (modifications (a) and (b)) will result in a final product where the article further comprises a thermoformable polymeric membrane material sandwiched between the thermoformable fabric substrate and the cured elastomeric coating composition. It is noted that the further addition of this membrane does not affect the ability of the final article to present a smooth and wrinkle-free appearance.

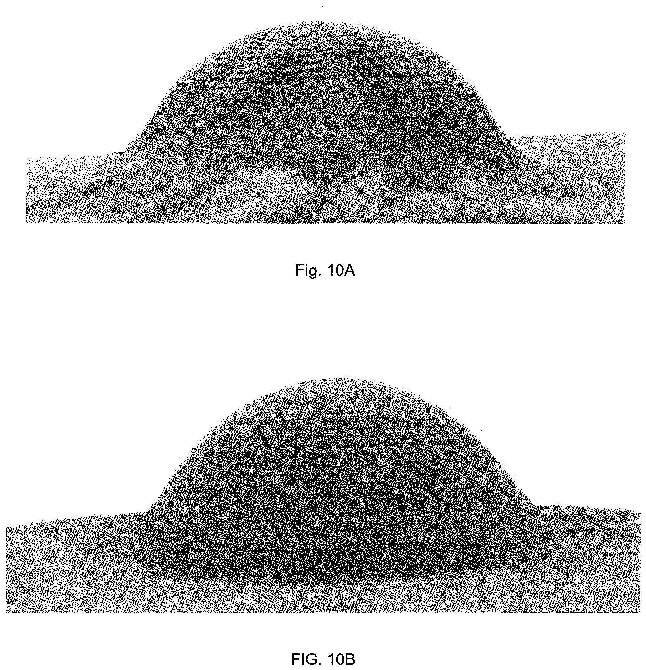

To clearly demonstrate the utility of the current invention, pictures of thermoformed bra cups are provided as Figures 10A and 10B. Figure 10A is a picture of a thermoformed bra cup where the elastomer (in the depicted example, the elastomer used was silicone) in the patterned blank was allowed to cure prior to thermoforming. As clearly shown in the picture of Figure 10A, the resulting bra cup has permanent wrinkles and creases, which are also evident in the remaining flat part of the original blank too. In direct contrast, the bra cup produced by with a blank containing an uncured silicone is free of such permanent wrinkles and presents a smooth surface following thermoforming. It is noteworthy that this also applies to remaining flat portion of the blank that has not been shaped into a bra cup.

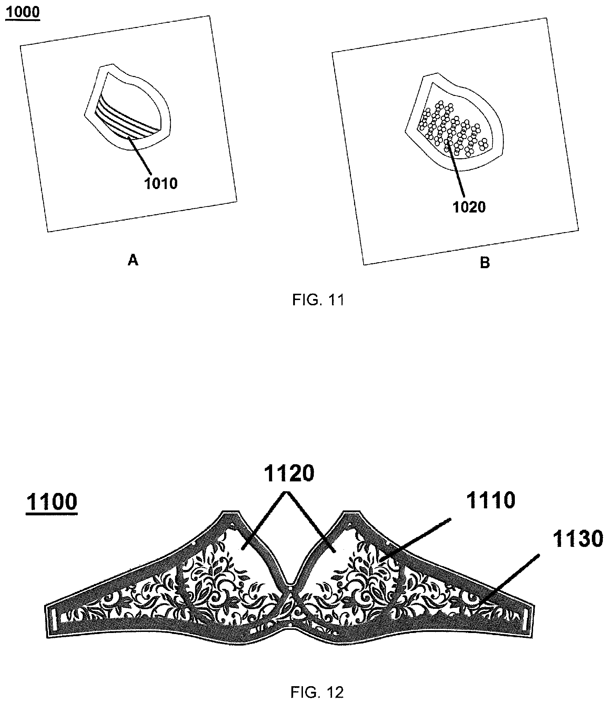

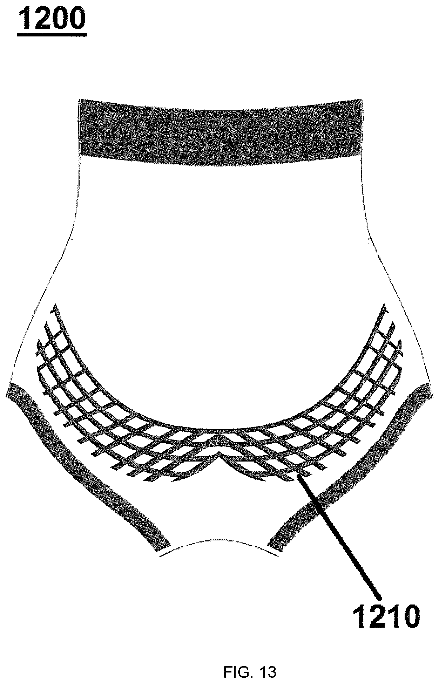

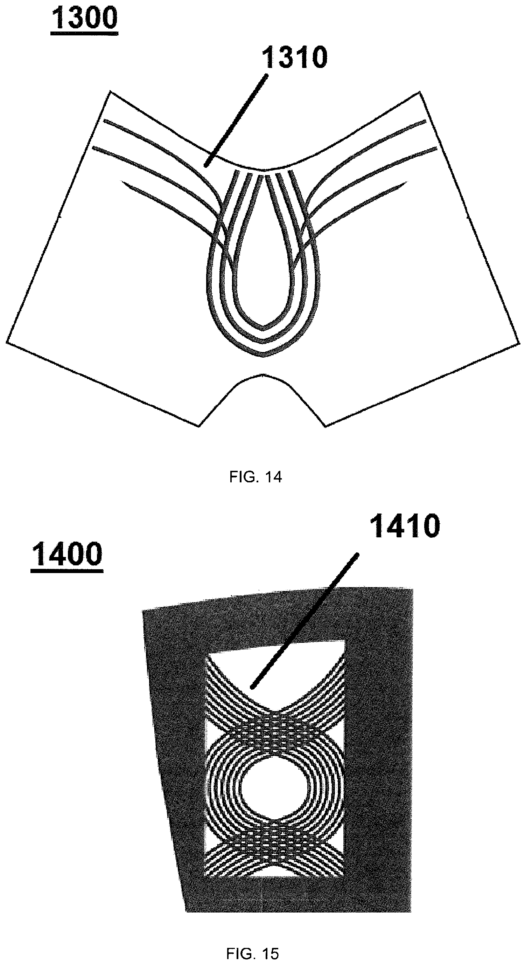

It will be appreciated that the article described herein may be the whole or part of a garment. For example, the article may be a bra cup, a chest piece (e.g. comprising two breast cups with breast support), a shoulder pad, a buttock or buttocks support, or a contouring support for a body part. Examples of the moulded products include the bra cups 1000 depicted in Figures 11A and 11B, where the patterns 1010 and 1020 are provided by the cured elastomeric composition, said patterns may help to retain the 3D shape of the molded garment, as well as being wrinkle/crease free. A more extensive pattern, encompassing molded and non-molded sections of a garment is depicted in Figure 12, where bra 1100 contains pattern 1110 across the bra cups 1120 as well as the wings 1130 of the bra. Figures 13 and 14 depict undergarments 1200 and 1300, respectively, with patterned areas 1210 and 1310 that have been subjected to thermoforming to provide a 3D shape to the garment. Finally, Figure 15 depicts a knee guard 1400 with pattern 1410.

## Claims

1. A method of making a molded 3-dimensional fabric article, the process comprising the steps of:
(i) providing a thermoformable fabric substrate having a top face and a bottom face;
(ii) applying an uncured elastomeric coating composition comprising an elastomeric polymer onto the top and/or bottom face of the fabric substrate in accordance with a pattern to form a thermoformable blank patterned with the uncured elastomeric coating composition;
(iii) thermoformably moulding the blank by applying a 3-dimensional mold for a period of time to provide a 3-dimensional molded article that is patterned with a cured elastomeric coating composition; and
(iv) removing the molded article from the mold, and optionally trimming any excess fabric, to provide a molded 3-dimensional fabric article, wherein:
the elastomeric coating composition further comprises an agent that retards the curing of an elastomeric coating;
the 3-dimensional mold in step (iii) is applied at a temperature and pressure sufficient to form the desired 3-dimensional molded article from the thermoformable fabric substrate and cure the uncured elastomeric coating composition during the period of time that it is applied to the blank, and
the molded 3-dimensional fabric article is a textile, forms the whole of a garment or forms a part of a garment.

2. The method of Claim 1, wherein the thermoformable fabric substrate is a substantially flat, thermoformable fabric substrate.

3. The method of Claim 1, wherein the thermoformable fabric substrate is a semi-shaped fabric substrate, where at least one region of the substrate has 3-dimensional character, optionally wherein the semi-shaped fabric substrate is a thermoformed fabric substrate, where at least one region of the substrate has 3-dimensional character introduced by a 3-dimensional mold in a prior thermoforming step.

4. The method of Claim 3, wherein in step (iii), the thermoformable moulding step is conducted on the at least one region having 3-dimensional character, or is conducted on a region of the substrate that encompasses the at least one region having 3-dimensional character, to provide a fully-shaped and molded 3-dimensional fabric article, optionally wherein in step (ii) of Claim 1, the uncured elastomeric coating is applied to the at least one region having 3-dimensional character.

5. The method of any one of the preceding claims, wherein:
(a) after step (ii) and before step (iii), one or more of a flock material, glitter and glass beads is applied onto the top and/or bottom surface of the flat blank patterned with the uncured elastomeric coating composition and, when needed, the excess flock material glitter and/or glass beads is removed either immediately after application or as part of step (iv); and/or
(b) after step (ii) and before step (iii), a further substantially flat fabric substrate is applied onto the top and/or bottom surface of the flat blank patterned with the uncured elastomeric coating composition.

6. The method of any one of the preceding claims, wherein:
(a) the elastomeric coating composition further comprises a colouring agent; and/or
(b) the application of the elastomeric polymer may be accomplished by jetting, printing, spraying, painting, or extrusion.

7. The method of any one of the preceding claims, wherein:
(a) before step (iii) is conducted, the substantially flat blank is kept under conditions that are not sufficient to activate the curing process or are not sufficient to achieve an amount of curing that results in wrinkles in the molded article; and/or
(b) when the molded 3-dimensional fabric article forms a part of a garment it is used in further process steps to form a garment, or when the molded 3-dimensional fabric article is a textile it is used in further process steps to form the whole or part of a garment; and/or
(c) the molded 3-dimensional fabric article is a bra cup, a chest piece (e.g. comprising two breast cups with breast support), a shoulder pad, a buttock or buttocks support, or a contouring support for a body part; and/or
(d) the elastomeric polymer is selected from one or more of the group consisting of a silicone polymer, a polyurethane, an ethylene propylene co-polymer, an ethylene propylene diene copolymer, epichlorohydrin polymer, an acrylic polymer, a flurorosilicone polymer, a fluoroelastomer, a perfluoroelastomer, a polyether block amide, a chlorosulfonated polyethylene, and an ethylene-vinyl acetate polymer, optionally wherein the elastomeric polymer is a silicone polymer (e.g. a liquid silicone rubber).

8. The method of any one of the preceding claims, wherein:
(a) the process further comprises applying the uncured elastomeric coating composition onto a first surface of a thermoformable polymeric membrane material to form a membrane composite material and then bonding the membrane composite material to the top and/or bottom face of the fabric substrate via a second surface of the thermoformable polymeric membrane material to form the patterned thermoformable blank provided in step (ii) of Claim 1, optionally wherein the thermoformable polymeric membrane material is a polyurethane membrane material, optionally wherein the thickness of the thermoformable polymeric membrane material is from 5 µm to 50 µm, such as 30 µm; and/or
(b) the process further comprises bonding a thermoformable polymeric membrane material to the top and/or bottom face of the fabric substrate to form a membrane region and subsequently applying the uncured elastomeric coating composition onto the membrane region to form the patterned thermoformable blank provided in step (ii) of Claim 1, optionally wherein the thermoformable polymeric membrane material is a polyurethane membrane material, optionally wherein the thickness of the thermoformable polymeric membrane material is from 5 µm to 50 µm, such as 30 µm.

9. A 3-dimensionally moulded fabric article comprising:
a thermoformable fabric substrate comprising a top surface and a bottom surface; and
a pattern on the top and/or bottom surface of the fabric substrate formed from a cured elastomeric coating composition, wherein
the top and/or bottom surface of the fabric substrate is substantially free of permanent wrinkles, wherein
the 3-dimensionally molded fabric article is a textile, or forms the whole or part of a garment; and
the elastomeric coating composition further comprises an agent that retards the curing of the silicone polymer.

10. The article of Claim 9, wherein:
(a) the elastomeric coating composition on the top and/or bottom layer is attached to and covered by one or more of a flock material, glitter and glass beads; and/or
(b) the article further comprises a layer of fabric placed over the top and/or bottom surface of the fabric substrate and attached to the elastomeric coating composition; and/or
(c) the layer of fabric placed over the top and/or bottom surface of the fabric substrate also does not contain one or more permanent wrinkles.

11. The article of Claim 9 or Claim 10, wherein the elastomeric coating composition further comprises a colouring agent.

12. The article of any one of Claims 9 to 11, wherein the article forms the whole or part of a garment, optionally wherein the article is a bra cup, a chest piece (e.g. comprising two breast cups with breast support), a shoulder pad, a buttock or buttocks support, or a contouring support for a body part.

13. The article of any one of Claims 9 to 12, wherein the elastomeric polymer is selected from one or more of the group consisting of a silicone polymer, an ethylene propylene co-polymer, a polyurethane, an ethylene propylene diene copolymer, an epichlorohydrin polymer, an acrylic polymer, a flurorosilicone polymer, a fluoroelastomer, a perfluoroelastomer, a polyether block amide, a chlorosulfonated polyethylene, and an ethylene-vinyl acetate polymer, optionally wherein the elastomeric polymer is a silicone polymer (e.g. a liquid silicone rubber).

14. The article of any one of Claims 9 to 13, wherein the article further comprises a thermoformable polymeric membrane material sandwiched between the thermoformable fabric substrate and the cured elastomeric coating composition, optionally wherein the thermoformable polymeric membrane material is a polyurethane membrane material, optionally wherein the thickness of the thermoformable polymeric membrane material is from 5 µm to 50 µm, such as 30 µm.

## Patentansprüche

1. Verfahren zum Herstellen eines geformten dreidimensionalen Gewebeartikels, wobei der Prozess die folgenden Schritte umfasst:
(i) Bereitstellen eines warmformbaren Gewebesubstrats, das eine Oberseite und eine Unterseite aufweist;
(ii) Aufbringen einer unausgehärteten elastomeren Überzugszusammensetzung, die ein elastomeres Polymer umfasst, auf die Ober- und/oder die Unterseite des Gewebesubstrats gemäß einem Muster, um einen warmformbaren Rohling zu bilden, der mit der unausgehärteten elastomeren Überzugszusammensetzung gemustert ist;
(iii) warmformbares Formen des Rohlings durch Anwenden einer dreidimensionalen Form für einen Zeitraum, um einen dreidimensionalen geformten Artikel bereitzustellen, der mit einer ausgehärteten elastomeren Überzugszusammensetzung gemustert ist; und
(iv) Entfernen des geformten Artikels aus der Form, und wahlweise Abschneiden jeglichen überschüssigen Gewebes, um einen geformten dreidimensionalen Gewebeartikel bereitzustellen, wobei:
die elastomere Überzugszusammensetzung ferner ein Mittel umfasst, welches das Aushärten eines elastomeren Überzugs verzögert;
die dreidimensionale Form in Schritt (iii) bei einer Temperatur und einem Druck angewendet wird, die ausreichen, um während des Zeitraums, in dem sie auf den Rohling angewendet wird, den gewünschten dreidimensionalen geformten Artikel aus dem warmformbaren Gewebesubstrat zu bilden und die unausgehärtete elastomere Überzugszusammensetzung auszuhärten, und
der geformte dreidimensionale Gewebeartikel eine Textilie ist, die Gesamtheit eines Kleidungsstücks bildet oder einen Teil eines Kleidungsstücks bildet.

2. Verfahren nach Anspruch 1, wobei das warmformbare Gewebesubstrat ein im Wesentlichen ebenes, warmformbares Gewebesubstrat ist.

3. Verfahren nach Anspruch 1, wobei das warmformbare Gewebesubstrat ein halbgestaltetes Gewebesubstrat ist, wo mindestens ein Bereich des Substrats eine dreidimensionale Beschaffenheit aufweist, wahlweise, wobei das halbgestaltete Gewebesubstrat ein warmformbares Gewebesubstrat ist, wo mindestens ein Bereich des Substrats eine dreidimensionale Beschaffenheit aufweist, die durch eine dreidimensionale Form in einem vorhergehenden Warmformungsschritt eingeführt wird.

4. Verfahren nach Anspruch 3, wobei, in Schritt (iii), der warmformbare Formungsschritt auf dem mindestens einen Bereich durchgeführt wird, der eine dreidimensionale Beschaffenheit aufweist, oder auf einem Bereich des Substrats durchgeführt wird, der den mindestens einen Bereich beinhaltet, der eine dreidimensionale Beschaffenheit aufweist, um einen vollständig gestalteten und geformten dreidimensionalen Gewebeartikel bereitzustellen, wahlweise, wobei in Schritt (ii) von Anspruch 1 der unausgehärtete elastomere Überzug auf den mindestens einen Bereich aufgebracht wird, der eine dreidimensionale Beschaffenheit aufweist.

5. Verfahren nach einem der vorhergehenden Ansprüche, wobei:
(a) nach Schritt (ii) und vor Schritt (iii) eines oder mehrere von einem Flockmaterial, Glitzer und Glasperlen auf die Ober- und/oder die Unterseite des mit der unausgehärteten elastomeren Überzugszusammensetzung gemusterten ebenen Rohlings aufgebracht wird und, wenn erforderlich, das überschüssige Flockmaterial, der überschüssige Glitzer und/oder die überschüssigen Glasperlen entweder unmittelbar nach dem Aufbringen oder als Teil von Schritt (iv) entfernt werden; und/oder
(b) nach Schritt (ii) und vor Schritt (iii) ein weiteres im Wesentlichen ebenes Gewebesubstrat auf die Ober- und/oder die Unterseite des mit der unausgehärteten elastomeren Überzugszusammensetzung gemusterten ebenen Rohlings aufgebracht wird.

6. Verfahren nach einem der vorhergehenden Ansprüche, wobei:
(a) die elastomere Überzugszusammensetzung ferner einen Farbstoff umfasst; und/oder
(b) das Aufbringen des elastomeren Polymers durch Strahlen, Drucken, Sprühen, Streichen oder Extrudieren bewerkstelligt werden kann.

7. Verfahren nach einem der vorhergehenden Ansprüche, wobei:
(a) bevor Schritt (iii) durchgeführt wird, der im Wesentlichen ebene Rohling unter Bedingungen gehalten wird, die nicht ausreichend sind, um den Aushärtungsprozess zu aktivieren, oder nicht ausreichend sind, um ein Ausmaß von Aushärtung zu erreichen, das zu Falten in dem geformten Artikel führt;, und/oder
(b) wenn der geformte dreidimensionale Gewebeartikel einen Teil eines Kleidungsstücks bildet, er in weiteren Prozessschritten verwendet wird, um ein Kleidungsstück zu bilden, oder, wenn der geformte dreidimensionale Gewebeartikel eine Textilie ist, er in weiteren Prozessschritten verwendet wird, um die Gesamtheit oder einen Teil eines Kleidungsstücks zu bilden; und/oder
(c) der geformte dreidimensionale Gewebeartikel ein BH-Körbchen, ein Bruststück (das z. B. zwei Brustkörbchen mit Bruststütze umfasst), ein Schulterpolster, eine Gesäßbacken- oder Gesäßstütze oder eine Konturierungsstütze für einen Körperteil ist; und/oder
(d) das elastomere Polymer ausgewählt ist aus einem oder mehreren von der Gruppe, die aus einem Silikonpolymer, einem Polyurethan, einem Ethylen-Propylen-Copolymer, einem Ethylen-Propylen-Dien-Copolymer, Epichlorhydrin-Polymer, einem Acryl-Polymer, einem Fluorsilikon-Polymer, einem Fluorelastomer, einem Perfluorelastomer, einem Polyether-Blockamid, einem chlorsulfonierten Polyethylen und einem Ethylen-Vinylacetat-Polymer besteht, wahlweise, wobei das elastomere Polymer ein Silikonpolymer (z. B. ein flüssiger Silikonkautschuk) ist.

8. Verfahren nach einem der vorhergehenden Ansprüche, wobei:
(a) der Prozess ferner das Aufbringen der unausgehärteten elastomeren Überzugszusammensetzung auf eine erste Oberfläche eines warmformbaren Polymer-Membranmaterials, um ein Membranverbundmaterial zu bilden, und danach das Kleben des Membranverbundmaterials an die Ober- und/oder die Unterseite des Gewebesubstrats über eine zweite Oberfläche des warmformbaren Polymer-Membranmaterials, um den gemusterten warmformbaren Rohling zu bilden, der in Schritt (ii) von Anspruch 1 bereitgestellt wird, umfasst, wahlweise, wobei das warmformbare Polymer-Membranmaterial ein Polyurethan-Membranmaterial ist, wahlweise, wobei die Dicke des warmformbaren Polymer-Membranmaterials 5 µm bis 50 µm, wie beispielsweise 30 µm, beträgt; und/oder
(b) der Prozess ferner das Kleben eines warmformbaren Polymer-Membranmaterials an die Ober- und/oder die Unterseite des Gewebesubstrats, um einen Membranbereich zu bilden, und anschließend das Aufbringen der unausgehärteten elastomeren Überzugszusammensetzung auf den Membranbereich, um den gemusterten warmformbaren Rohling zu bilden, der in Schritt (ii) von Anspruch 1 bereitgestellt wird, umfasst, wahlweise, wobei das warmformbare Polymer-Membranmaterial ein Polyurethan-Membranmaterial ist, wahlweise, wobei die Dicke des warmformbaren Polymer-Membranmaterials 5 µm bis 50 µm, wie beispielsweise 30 µm, beträgt.

9. Dreidimensional geformter Gewebeartikel, der Folgendes umfasst:
ein warmformbares Gewebesubstrat, das eine Oberseite und eine Unterseite umfasst; und
ein Muster auf der Ober- und/oder der Unterseite des Gewebesubstrats, das aus einer ausgehärteten elastomeren Überzugszusammensetzung gebildet ist, wobei
die Ober- und/oder die Unterseite des Gewebesubstrats im Wesentlichen frei von dauerhaften Falten ist, wobei
der dreidimensional geformte Gewebeartikel eine Textilie ist, oder die Gesamtheit oder einen Teil eines Kleidungsstücks bildet; und
die elastomere Überzugszusammensetzung ferner ein Mittel umfasst, welches das Aushärten des Silikonpolymers verzögert.

10. Artikel nach Anspruch 9, wobei:
(a) die elastomere Überzugszusammensetzung auf der oberen und/oder der unteren Lage an einem oder mehreren von einem Flockmaterial, Glitzer und Glasperlen angebracht und davon bedeckt ist; und/oder
(b) der Artikel ferner eine Gewebelage umfasst, die über der Ober- und/oder der Unterseite des Gewebesubstrats platziert und an der elastomeren Überzugszusammensetzung angebracht ist; und/oder
(c) die Gewebelage, die über der Ober- und/oder der Unterseite des Gewebesubstrats platziert ist, ebenfalls nicht eine oder mehrere dauerhafte Falten enthält.

11. Artikel nach Anspruch 9 oder Anspruch 10, wobei die elastomere Überzugszusammensetzung ferner einen Farbstoff umfasst.

12. Artikel nach einem der Ansprüche 9 bis 11, wobei der Artikel die Gesamtheit oder einen Teil eines Kleidungsstücks bildet, wahlweise, wobei der Artikel ein BH-Körbchen, ein Bruststück (das z. B. zwei Brustkörbchen mit Bruststütze umfasst), ein Schulterpolster, eine Gesäßbacken- oder Gesäßstütze oder eine Konturierungsstütze für einen Körperteil ist.

13. Artikel nach einem der Ansprüche 9 bis 12, wobei das elastomere Polymer ausgewählt ist aus einem oder mehreren von der Gruppe, die aus einem Silikonpolymer, einem Ethylen-Propylen-Copolymer, einem Polyurethan, einem Ethylen-Propylen-Dien-Copolymer, einem Epichlorhydrin-Polymer, einem Acryl-Polymer, einem Fluorsilikon-Polymer, einem Fluorelastomer, einem Perfluorelastomer, einem Polyether-Blockamid, einem chlorsulfonierten Polyethylen und einem Ethylen-Vinylacetat-Polymer besteht, wahlweise, wobei das elastomere Polymer ein Silikonpolymer (z. B. ein flüssiger Silikonkautschuk) ist.

14. Artikel nach einem der Ansprüche 9 bis 13, wobei der Artikel ferner ein warmformbares Polymer-Membranmaterial umfasst, das zwischen dem warmformbaren Gewebesubstrat und der ausgehärteten elastomeren Überzugszusammensetzung eingeschoben ist, wahlweise, wobei das warmformbare Polymer-Membranmaterial ein Polyurethan-Membranmaterial ist, wahlweise, wobei die Dicke des warmformbaren Polymer-Membranmaterials 5 µm bis 50 µm, wie beispielsweise 30 µm, beträgt.

## Revendications

1. Procédé de fabrication d'un article en tissu tridimensionnel moulé, le procédé comprenant les étapes consistant à :
(i) fournir un substrat de tissu thermoformable présentant une face supérieure et une face inférieure ;
(ii) appliquer une composition de revêtement élastomère non durcie comprenant un polymère élastomère sur la face supérieure et/ou inférieure du substrat de tissu conformément à un motif pour former une ébauche thermoformable présentant des motifs avec la composition de revêtement élastomère non durcie ;
(iii) mouler de manière thermoformable l'ébauche en appliquant un moule tridimensionnel pendant une période de temps pour fournir un article moulé tridimensionnel qui présente des motifs avec une composition de revêtement élastomère durcie ; et
(iv) enlever l'article moulé du moule, et facultativement découper un quelconque excédent de tissu, pour fournir un article en tissu tridimensionnel moulé, dans lequel :
la composition de revêtement élastomère comprend en outre un agent qui retarde le durcissement d'un revêtement élastomère ;
le moule tridimensionnel à l'étape (iii) est appliqué à une température et une pression suffisantes pour former l'article moulé tridimensionnel souhaité à partir du substrat de tissu thermoformable et durcir la composition de revêtement élastomère non durcie pendant la période de temps pour laquelle il est appliqué à l'ébauche, et
l'article en tissu tridimensionnel moulé est un textile, forme la totalité d'un vêtement ou forme une partie d'un vêtement.

2. Procédé selon la revendication 1, dans lequel le substrat de tissu thermoformable est un substrat de tissu thermoformable sensiblement plat.

3. Procédé selon la revendication 1, dans lequel le substrat de tissu thermoformable est un substrat de tissu semi-façonné, où au moins une région du substrat présente un caractère tridimensionnel, facultativement dans lequel le substrat de tissu semi-façonné est un substrat de tissu thermoformé, où au moins une région du substrat présente un caractère tridimensionnel introduit par un moule tridimensionnel lors d'une étape de thermoformage préalable.

4. Procédé selon la revendication 3, dans lequel à l'étape (iii), l'étape de moulage thermoformable est menée sur l'au moins une région présentant un caractère tridimensionnel, ou est menée sur une région du substrat qui englobe l'au moins une région présentant un caractère tridimensionnel, pour fournir un article en tissu tridimensionnel moulé et entièrement façonné, facultativement dans lequel lors de l'étape (ii) de la revendication 1, le revêtement élastomère non durci est appliqué sur l'au moins une région présentant un caractère tridimensionnel.

5. Procédé selon l'une quelconque des revendications précédentes, dans lequel :
(a) après l'étape (ii) et avant l'étape (iii), un ou plusieurs d'un matériau de flocage, d'un matériau scintillant et de billes en verre sont appliqués sur la surface supérieure et/ou inférieure de l'ébauche plate présentant des motifs avec la composition de revêtement élastomère non durcie et, si besoin, le matériau de flocage, le matériau scintillant et/ou les billes en verre en excédent sont enlevées soit immédiatement après l'application ou dans le cadre de l'étape (iv) ; et/ou
(b) après l'étape (ii) et avant l'étape (iii), un substrat de tissu sensiblement plat supplémentaire est appliqué sur la surface supérieure et/ou inférieure de l'ébauche plate présentant des motifs avec la composition de revêtement élastomère non durcie.

6. Procédé selon l'une quelconque des revendications précédentes, dans lequel :
(a) la composition de revêtement élastomère comprend en outre un agent colorant ; et/ou
(b) l'application du polymère élastomère peut être accomplie par giclée, impression, pulvérisation, peinture ou extrusion.

7. Procédé selon l'une quelconque des revendications précédentes, dans lequel :
(a) avant que l'étape (iii) soit menée, l'ébauche sensiblement plate est maintenue dans des conditions qui ne sont pas suffisantes pour activer le processus de durcissement ou ne sont pas suffisantes pour obtenir un degré de durcissement qui se traduit par des plis dans l'article moulé ; et/ou
(b) lorsque l'article en tissu tridimensionnel moulé forme une partie d'un vêtement il est utilisé dans des étapes de processus supplémentaires pour former un vêtement, ou lorsque l'article en tissu tridimensionnel moulé est un textile il est utilisé dans des étapes de processus supplémentaires pour former la totalité ou une partie d'un vêtement ; et/ou
(c) l'article en tissu tridimensionnel moulé est un bonnet de soutien-gorge, une pièce thoracique (par exemple comprenant deux bonnets de sein avec un support de sein), une épaulière, un support de fesse ou des fesses ou un support de contour pour une partie de corps ; et/ou
(d) le polymère élastomère est sélectionné à partir d'un ou plusieurs du groupe constitué d'un polymère de silicone, d'un polyuréthane, d'un copolymère d'éthylène-propylène, d'un copolymère de diène d'éthylène et de propylène, d'un polymère d'épichlorohydrine, d'un polymère acrylique, d'un polymère de fluorosilicone, d'un fluoroélastomère, d'un perfluoroélastomère, d'un amide à blocs de polyéther, d'un polyéthylène chlorosulfoné et d'un polymère d'éthylène-acétate de vinyle, facultativement dans lequel le polymère élastomère est un polymère de silicone (par exemple un caoutchouc de silicone liquide).

8. Procédé selon l'une quelconque des revendications précédentes, dans lequel :
(a) le processus comprend en outre l'application de la composition de revêtement élastomère non durcie sur une première surface d'un matériau de membrane polymère thermoformable pour former un matériau composite de membrane et ensuite le collage du matériau composite de membrane à la face supérieure et/ou inférieure du substrat de tissu *via* une seconde surface du matériau de membrane polymère thermoformable pour former l'ébauche thermoformable présentant des motifs fournie à l'étape (ii) de la revendication 1, facultativement dans lequel le matériau de membrane polymère thermoformable est un matériau de membrane de polyuréthane, facultativement dans lequel l'épaisseur du matériau de membrane polymère thermoformable est de 5 µm à 50 µm, par exemple 30 µm ; et/ou
(b) le processus comprend en outre le collage d'un matériau de membrane polymère thermoformable à la face supérieure et/ou inférieure du substrat de tissu pour former une région de membrane et ultérieurement l'application de la composition de revêtement élastomère non durcie sur la région de membrane pour former l'ébauche thermoformable présentant des motifs fournie à l'étape (ii) de la revendication 1, facultativement dans lequel le matériau de membrane polymère thermoformable est un matériau de membrane de polyuréthane, facultativement dans lequel l'épaisseur du matériau de membrane polymère thermoformable est de 5 µm à 50 µm, par exemple 30 µm.

9. Article en tissu moulé en trois dimensions comprenant :
un substrat de tissu thermoformable comprenant une surface supérieure et une surface inférieure ; et
un motif sur la surface supérieure et/ou inférieure du substrat de tissu formé à partir d'une composition de revêtement élastomère durcie, dans lequel
la surface supérieure et/ou inférieure du substrat de tissu est sensiblement exempte de plis permanents, dans lequel
l'article en tissu moulé en trois dimensions est un textile, ou forme la totalité ou une partie d'un vêtement ; et
la composition de revêtement élastomère comprend en outre un agent qui retarde le durcissement du polymère de silicone.

10. Article selon la revendication 9, dans lequel :
(a) la composition de revêtement élastomère sur la couche supérieure et/ou inférieure est fixée à et recouverte par un ou plusieurs d'un matériau de flocage, d'un matériau scintillant et de billes en verre ; et/ou
(b) l'article comprend en outre une couche de tissu placée par-dessus la surface supérieure et/ou inférieure du substrat de tissu et fixée à la composition de revêtement élastomère ; et/ou
(c) la couche de tissu placée par-dessus la surface supérieure et/ou inférieure du substrat de tissu ne contient également pas un ou plusieurs plis permanents.

11. Article selon la revendication 9 ou la revendication 10, dans lequel la composition de revêtement élastomère comprend en outre un agent colorant.

12. Article selon l'une quelconque des revendications 9 à 11, dans lequel l'article forme la totalité ou une partie d'un vêtement, facultativement dans lequel l'article est un bonnet de soutien-gorge, une pièce thoracique (par exemple comprenant deux bonnets de sein avec un support de sein), une épaulière, un support de fesse ou des fesses ou un support de contour pour une partie de corps.

13. Article selon l'une quelconque des revendications 9 à 12, dans lequel le polymère élastomère est sélectionné à partir d'un ou plusieurs du groupe constitué d'un polymère de silicone, d'un copolymère d'éthylène-propylène, d'un polyuréthane, d'un copolymère de diène d'éthylène et de propylène, d'un polymère d'épichlorohydrine, d'un polymère acrylique, d'un polymère de fluorosilicone, d'un fluoroélastomère, d'un perfluoroélastomère, d'un amide à blocs de polyéther, d'un polyéthylène chlorosulfoné et d'un polymère d'éthylène-acétate de vinyle, facultativement dans lequel le polymère élastomère est un polymère de silicone (par exemple un caoutchouc de silicone liquide).

14. Article selon l'une quelconque des revendications 9 à 13, dans lequel l'article comprend en outre un matériau de membrane polymère thermoformable pris en sandwich entre le substrat de tissu thermoformable et la composition de revêtement élastomère durcie, facultativement dans lequel le matériau de membrane polymère thermoformable est un matériau de membrane polyuréthane, facultativement dans lequel l'épaisseur du matériau de membrane polymère thermoformable est de 5 µm à 50 µm, par exemple 30 µm.
